# EUROPÄISCHE PATENTSCHRIFT

(11) **EP 1 698 862 B1**
(45) Veröffentlichungstag und Bekanntmachung des Hinweises auf die Patenterteilung: **07.11.2007**
(21) Anmeldenummer: 06001490.9
(22) Anmeldetag: 25.01.2006
(51) Int. Cl.: G01D 5/245, G01D 5/241, G01D 5/14, G01P 3/487

(54) **Encoder**
Encoder
Encodeur

(30) Priorität: 02.03.2005 DE 102005010121
(43) Veröffentlichungstag der Anmeldung: 06.09.2006
(73) Patentinhaber: Carl Freudenberg KG, 69469 Weinheim (DE)
(72) Erfinder: Gund, Christoph, 69221 Dossenheim (DE); Forté, Olivier, 52200 Langres (FR); Salagnac, Laurent, 52200 Langres (FR)

(56) Entgegenhaltungen:
- US-A1- 2003 116 703
- US-B1- 6 246 233
- US-B1- 6 265 867

## Beschreibung

Die Erfindung betrifft einen Encoder, der kreisringförmig ausgebildet ist und in Umfangsrichtung abwechselnd Nord- und Südpole aufweist, wobei zumindest einer der Pole eine Länge in Umfangsrichtung aufweist, abweichend von der Länge eines benachbart angrenzenden Pols.

Derartige Encoder sind allgemein bekannt, beispielsweise aus der US 2003/0116703 A1.
Der vorbekannte Encoder gelangt als Kurbelwellen-Encoder zur Anwendung und weist eine Unregelmäßigkeit entlang seines Umfang auf. Fehler bei der Erfassung dieser Unregelmäßigkeit durch den Sensor werden durch die spezielle Gestalt und die spezielle Magnetisierung kompensiert. Durch die vorbekannte Ausgestaltung wird sicher gestellt, dass der radiale Abstand des Sensors von der Encoderoberfläche nur einen geringen Einfluss auf die Genauigkeit der Detektierung dieser Unregelmäßigkeits-Stelle hat.
Allerdings führen beim vorbekannten Encoder Abweichungen der Sensorposition von Encoderspurmitte, quer zur Umfangsrichtung des Encoders betrachtet, zu Fehlern bei der Detektierung der Teilung.

### Darstellung der Erfindung

Der Erfindung liegt die Aufgabe zugrunde, einen Encoder der vorbekannten Art derart weiterzuentwickeln, dass Fehler bei der Detektierung der Teilung der Pole auch bei axialem Versatz des Encoders zum Sensor, d.h. quer zur Umfangsrichtung des Encoders, nicht zunehmen/entstehen; ein axialer Versatz des Sensors relativ zur Encoderspurmitte, soll einen möglichst geringen Einfluss auf die Genauigkeit der Detektierung der unterschiedlich langen Pole haben.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass zumindest jeder der benachbart aneinander angrenzenden Pole unterschiedlicher Länge zwei zum jeweiligen Pol entgegengesetzt gepolte Kompensationspole aufweist, die an einander gegenüber liegenden Längsseiten des jeweiligen Pols angeordnet sind und jeweils die Länge des entsprechenden Pols aufweisen. Bei einer derartigen Ausgestaltung ist von Vorteil, dass Seiten-Nachbarpole entgegengesetzt magnetisiert und Eck-Nachbarpole gleichmagnetisiert sind.

In Umfangsrichtung angrenzend befinden sich jeweils entgegengesetzt gepolte Pole und in axialer Richtung des Encoders, also quer zur Umfangsrichtung, befinden sich die Kompensationspole, die entgegengesetzt zum Pol gepolt und gleich wie die in Umfangsrichtung angrenzenden Pole gepolt sind.

Die Vorteile eines solchen Encoders sind hauptsächlich darin zu sehen, dass weder ein sich verändernder radialer Abstand der Encoderoberfläche, relativ zum Sensor, noch ein axialer Versatz des Sensors zur Encoderspurmitte einen nachteiligen Einfluss auf die Detektierung der Teilung des Encoders haben. Auch wenn die Zuordnung des Sensors zum Encoder, sowohl in radialer Richtung als auch axial zur Encoderspurmitte nur ungefähr vorgenommen wird, werden unterschiedlich lange Pole fehlerfrei detektiert. Alle Feldlinien, die aus der Oberfläche des Encoders austreten, enden bei einer derartigen Ausgestaltung auch wieder in der Oberfläche des Encoders. Durch diesen "Kurzschluss" der Magnetfeldlinien, insbesondere aus der Mitte breiter Pole, wird die Abhängigkeit der Richtigkeit der detektierten Positionen der Polgrenzen von der Lage des Sensors zur Encoderoberfläche deutlich verringert.

Idealerweise ist die Breite eines jeden Kompensationspols, quer zur Umfangsrichtung des Encoders betrachtet, halb so groß, wie die Breite des entsprechenden Pols.

Jeder Pol des Encoders weist bevorzugt jeweils zwei Kompensationspole auf, wobei generell die Kompensationspole eines jeden Pols übereinstimmend ausgebildet und magnetisiert sind, um eine möglichst gute Kompensation zu erreichen.
Bei Encodern mit unterschiedlicher Teilung traten bei der Erfassung der Signale bisher Fehler, die im Bereich des Übergangs von einem Pol zum anderen Pol entstehen, auf. Die Fehler entstehen normalerweise dadurch, dass unterschiedlich lange Pole unterschiedlich starke Magnetfelder erzeugen und es dadurch zu unerwünschten Ablenkungen des Magnetfelds kommt.

Bei dem erfindungsgemäßen Encoder treten diese Nachteile nicht auf.

Da die magnetischen Feldlinien generell immer den "kürzesten Weg" nehmen, ist der negative Einfluss unterschiedlich langer einander in Umfangsrichtung angrenzender, entgegengesetzt gepolter Pole auf die Genauigkeit der Detektierung der Polgrenzen reduziert, da die quer zur Umfangsrichtung zum jeweiligen Pol angeordneten Kompensationspole diese unerwünschten Einflüsse durch "Aufnahme" der Feldlinien auf dem kurzen Weg kompensieren. Die Kompensation ist besonders effizient, wenn die Breite eines jeden Kompensationspols, quer zur Umfangsrichtung des Encoders betrachtet, halb so groß ist, wie die Breite des entsprechenden Pols und wenn die Kompensationspole eines jeden Pols übereinstimmend ausgebildet und magnetisiert sind.

Außerdem ist die Kompensation besonders wirkungsvoll, wenn das Verhältnis aus Länge und Breite der Pole ≥ 1, insbesondere zumindest 2 ist.

Ist das Verhältnis aus Länge und Breite der Pole demgegenüber ≤ 0,5, funktioniert die Kompensation nur noch sehr eingeschränkt, insbesondere dann, wenn der radiale Abstand des Sensors von der Oberfläche des Encoders größer wird, beispielsweise mehr als 1 mm beträgt.

Der zuvor beschriebene Encoder gelangt bevorzugt als Nockenwellenencoder zur Anwendung. Nockenwellenencoder liefern die Ist-Position der Nocken für den Ventiltrieb und die Information, welcher Zylinder einer Viertaktverbrennungskraftmaschine als nächstes zur Zündung ansteht. Es ist üblich, die Information auf zwei Encoder zu verteilen, so dass für jede Nockenwelle ein Encoderpaar zum Einsatz kommt. Neben der Identifizierung, welcher Zylinder gezündet werden muss, dienen die Informationen, die durch den Encoder detektiert werden, zum Beispiel der Regelung einer vollvariablen Ventilsteuerung.
Ein Kurbelwellenencoder, wie er beispielsweise aus dem eingangs genannten Stand der Technik bekannt ist, liefert ein genaues Zeitmass für die Zündung und eine OT-Information, z.B. die Information über OT der Zylinder 1 und 3 bei einer Vierzylinder-Verbrennungskraftmaschine. Die Nockenwellenencoder drehen dadurch, dass sie auf der Nockenwelle angeordnet sind, mit der halben Drehzahl des Kurbelwellenencoders und liefern die Unterscheidung für die Zündung des Zylinders 1 oder 3 bzw. 2 oder 4 einer Vierzylinder-Verbrennungskraftmaschine.

Ein Ausführungsbeispiel des erfindungsgemäßen Encoders wird nachfolgend anhand der Figuren 1 bis 3 näher erläutert.

Diese zeigen in schematischer Darstellung:
- Fig. 1: einen Ausschnitt aus der Oberfläche eines herkömmlichen, unkompensierten Encoders,
- Fig. 2: einen Ausschnitt aus der Oberfläche eines erfindungsgemäßen kompensierten Encoders,
- Fig. 3: ein Diagramm, bei dem der Fehler bei der Detektierung der Teilung über dem radialen Abstand des Sensors über der Oberfläche des Encoders aufgetragen ist, für einen unkompensierten Encoder entsprechend Fig. 1 und einen kompensierten Encoder, entsprechend Fig. 2.

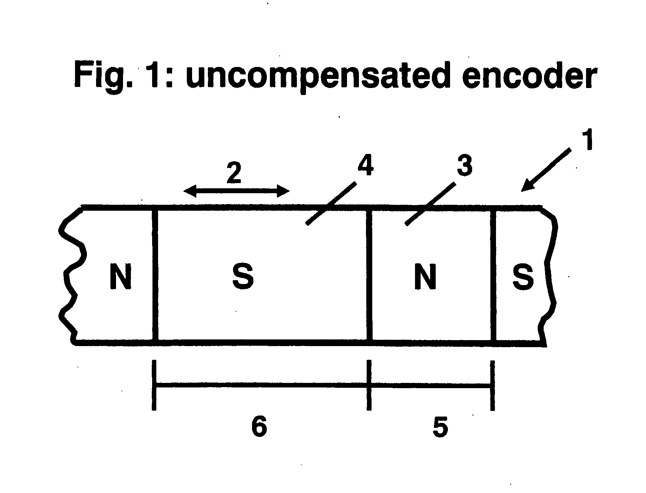

In Fig. 1 ist ein Ausschnitt aus der Oberfläche eines unkompensierten Encoders 1 dargestellt, der Stand der Technik ist. Der Encoder 1 ist kreisringförmig ausgebildet und weist in Umfangsrichtung 2 abwechselnd Nord- 3 und Südpole 4 auf. Zumindest einer der Südpole 4 weist eine Länge 6 auf, die von der Länge 5 des Nordpols 3, der benachbart an den Südpol 4 angrenzt, abweicht.
Bei einem derart magnetisierten Encoder 1 gelangen nicht alle magnetischen Feldlinien, die von der Oberfläche des Encoders 1 ausgehen, wieder zur Oberfläche des Encoders 1 zurück, da die unterschiedlich langen Nord- 3 und Südpole 4 unterschiedlich starken Magnetfelder erzeugen und es dadurch zu einer unerwünschten Ablenkung des Magnetfelds kommt. Die unterschiedliche Teilung/Länge der Nord- 3 und Südpole 4 kann dadurch nicht mehr fehlerfrei erfasst werden.

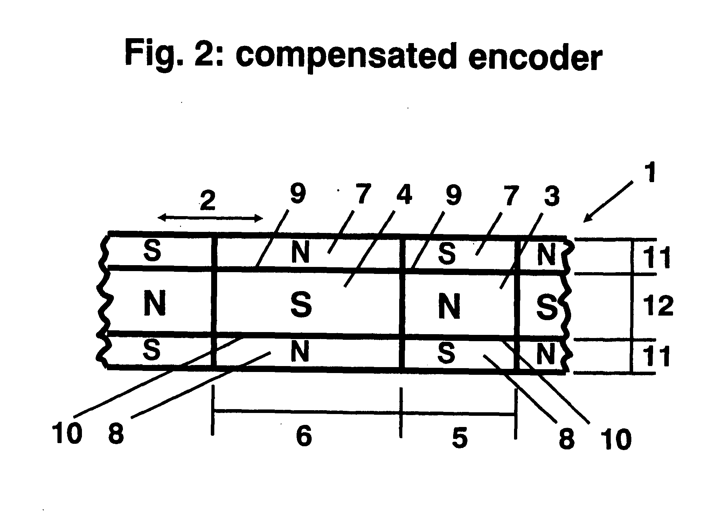

In Fig. 2 ist ein Ausschnitt aus der Oberfläche eines kompensierten, erfindungsgemäßen Encoders 1 gezeigt. Der Encoder 1 ist kreisringförmig ausgebildet und weist in Umfangsrichtung 2 abwechselnd Nord- 3 und Südpole 4 auf, wobei eine Vielzahl der Pole 3, 4 eine Länge 5 in Umfangsrichtung 2 aufweisen, abweichend von der Länge 6 der benachbart angrenzenden Pole 4, 3.

Jeder der Pole 3, 4 weist jeweils zwei Kompensationspole 7, 8 auf, wobei die Breite 11 eines jeden Kompensationspols 7, 8, quer zur Umfangsrichtung 2 des Encoders 1 betrachtet, halb so groß ist, wie die Breite 12 des entsprechenden Pols 3, 4. Die Summe aus der Fläche der Kompensationspole 7, 8 entspricht der Fläche des jeweiligen Pols 3 oder 4.

Die Kompensationspole 7, 8 eines jeden Pols 3, 4 sind übereinstimmend ausgebildet und magnetisiert.
Die Kompensationspole 7, 8 sind zum jeweiligen Pol 3, 4 entgegengesetzt gepolt und an einander gegenüberliegenden Längsseiten 9, 10 des Pols 3, 4 angeordnet und weisen jeweils die Länge 5, 6 des entsprechenden Pols 3, 4 auf.

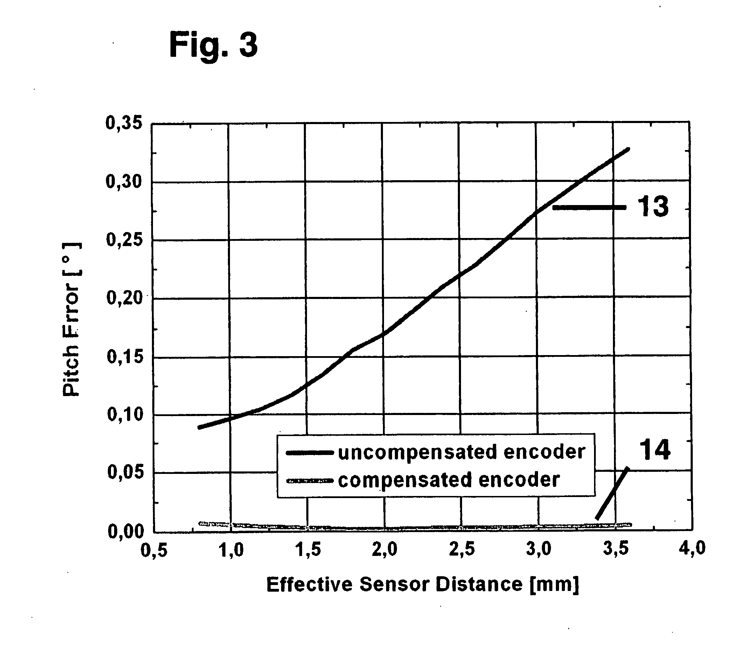

Wie in Fig. 2 zu erkennen ist, sind die Seiten-Nachbarpole entgegengesetzt und die Eck-Nachbarpole gleichmagnetisiert.
Durch eine derartige Ausgestaltung wird erreicht, dass alle magnetischen Feldlinien, die von der Oberfläche des Encoders 1 ausgehen, auch wieder in der Oberfläche des Encoders 1 enden. Die Polgrenzen zwischen den einander benachbarten Polen 3, 4 kann dadurch vom Sensor besonders genau detektiert werden, wie in Fig. 3 gezeigt.

In Fig. 3 ist ein Diagramm dargestellt, in dem der Fehler bei der Detektierung der Teilung des Encoders 1 über dem radialen Abstand zwischen Oberfläche des Encoders 1 und dem nicht dargestellten Sensor aufgetragen ist.

Das Verhalten des nicht-kompensierten Encoders 1 aus Fig. 1 wird durch die Linie 13 dargestellt, während das Verhalten des kompensierten Encoders 1 gemäß Fig. 2 durch die Linie 14 beschrieben ist.

Es ist zu erkennen, dass bereits bei geringen radialen Abständen des Sensors von der Oberfläche des Encoders 1 der Fehler bei der Detektierung der Teilung der Pole 3, 4 des unkompensierten Encoders 1 etwa 10-mal höher liegt, als der entsprechende Fehler des kompensierten Encoders 1, wobei der Fehler des kompensierten Encoders 1 vernachlässigbar gering und nahe null ist. Der Fehler des kompensierten Encoders 1 bleibt auch dann konstant sehr gering, wenn sich der radiale Abstand zwischen Sensor und Oberfläche des Encoders 1 vergrößert. Im Gegensatz dazu steigt der Fehler beim nicht-kompensierten Encoder 1 mit zunehmendem radialen Abstand zwischen Oberfläche des Encoders 1 und Sensor sehr stark an.

## Patentansprüche

1. Encoder (1) der kreisringförmig ausgebildet ist und in Umfangsrichtung (2) abwechselnd Nord-(3) und Südpole (4) aufweist, wobei zumindest einer der Pole (3, 4) eine Länge (5) in Umfangsrichtung (2) aufweist, abweichend von der Länge (6) eines benachbart angrenzenden Pols (4, 3), **dadurch gekennzeichnet, dass** zumindest jeder der benachbart aneinander angrenzenden Pole (3, 4) unterschiedlicher Länge (5, 6) zwei zum jeweiligen Pol (3, 4) entgegengesetzt gepolte Kompensationspole (7, 8) aufweist, die an einander gegenüber liegenden Längsseiten (9, 10) des jeweiligen Pols (3, 4) angeordnet sind und jeweils die Länge (5, 6) des entsprechenden Pols (3, 4) aufweisen.

2. Encoder (1) nach Anspruch 1, **dadurch gekennzeichnet, dass** die Breite (11) eines jeden Kompensationspols (7, 8), quer zur Umfangsrichtung (2) des Encoders (1) betrachtet, halb so groß ist, wie die Breite (12) des entsprechenden Pols (3, 4).

3. Encoder (1) nach einem der Ansprüche 1 oder 2, **dadurch gekennzeichnet, dass** jeder Pol (3, 4) jeweils zwei Kompensationspole (7, 8) aufweist.

4. Encoder (1) nach einem der Ansprüche 1 bis 3, **dadurch gekennzeichnet, dass** die Kompensationspole (7, 8) eines jeden Pols (3, 4) übereinstimmend ausgebildet und magnetisiert sind.

5. Encoder (1) nach einem der Ansprüche 1 bis 4, **dadurch gekennzeichnet, dass** das Verhältnis aus Länge (5, 6) und Breite (12) der Pole (3, 4) ≥ 1 ist.

6. Encoder (1) nach Anspruch 5, **dadurch gekennzeichnet, dass** das Verhältnis zumindest 2 beträgt.

7. Verwendung eines Encoders (1) nach einem der Ansprüche 1 bis 6 als Nockenwellen-Encoder zur Detektierung des oberen Totpunkts eines jeden Zylinders einer Verbrennungskraftmaschine.

## Claims

1. Encoder (1) which is in the form of a ring and has north poles (3) and south poles (4) which alternate in the circumferential direction (2), with at least one of the poles (3, 4) having a length (5) in the circumferential direction (2) which differs from the length (6) of an adjacent pole (4, 3), **characterized in that** at least each of the adjacent poles (3, 4) of different length (5, 6) has two compensation poles (7, 8) whose polarity opposes the respective pole (3, 4) and which are arranged on mutually opposite longitudinal sides (9, 10) of the respective pole (3, 4) and each have the length (5, 6) of the corresponding pole (3, 4).

2. Encoder (1) according to Claim 1, **characterized in that** the width (11) of each compensation pole (7, 8), as viewed transverse to the circumferential direction (2) of the encoder (1), is half the width (12) of the corresponding pole (3, 4).

3. Encoder (1) according to either of Claims 1 and 2, **characterized in that** each pole (3, 4) has two compensation poles (7, 8) in each case.

4. Encoder (1) according to one of Claims 1 to 3, **characterized in that** the compensation poles (7, 8) of each pole (3, 4) are analogously formed and magnetized.

5. Encoder (1) according to one of Claims 1 to 4, **characterized in that** the ratio of length (5, 6) to width (12) of the poles (3, 4) is ≥ 1.

6. Encoder (1) according to Claim 5, **characterized in that** the ratio is at least 2.

7. Use of an encoder (1) according to one of Claims 1 to 6 as a camshaft encoder for detecting the top dead centre of each cylinder of an internal combustion engine.

## Revendications

1. Encodeur (1) en forme d'anneau circulaire et présentant des pôles Nord (3) et Sud (4) alternant dans la direction périphérique (2), dans lequel au moins un des pôles (3, 4) présente en direction périphérique (2) une longueur (5) différente de la longueur (6) d'un pôle adjacent voisin (4, 3), **caractérisé en ce qu'**au moins chacun des pôles de longueur différente (5, 6) adjacents voisins l'un de l'autre (3, 4) présente deux pôles de compensation (7, 8) de polarité opposée au pôle respectif (3, 4), qui sont disposés sur des longs côtés (9, 10) du pôle respectif (3, 4) situés l'un en face de l'autre et présentent chaque fois la longueur (5, 6) du pôle correspondant (3, 4).

2. Encodeur (1) selon la revendication 1, **caractérisé en ce que** la largeur (11) de chaque pôle de compensation (7, 8), considérée transversalement à la direction périphérique (2) de l'encodeur (1), est deux fois plus petite que la largeur (12) du pôle correspondant (3, 4).

3. Encodeur (1) selon l'une quelconque des revendications 1 ou 2, **caractérisé en ce que** chaque pôle (3, 4) présente chaque fois deux pôles de compensation (7, 8).

4. Encodeur (1) selon l'une quelconque des revendications 1 à 3, **caractérisé en ce que** les pôles de compensation (7, 8) de chaque pôle (3, 4) est formé et magnétisé de manière concordante.

5. Encodeur (1) selon l'une quelconque des revendications 1 à 4, **caractérisé en ce que** le rapport de la longueur (5, 6) à la largeur (12) des pôles (3, 4) est ≥ 1.

6. Encodeur (1) selon la revendication 5, **caractérisé en ce que** le rapport vaut au moins 2.

7. Utilisation d'un encodeur (1) selon l'une quelconque des revendications 1 à 6 comme encodeur d'arbre à cames pour la détection du point mort haut de chaque cylindre d'un moteur à combustion interne.
